# FASCICULE DE BREVET EUROPEEN

(11) **EP 3 222 020 B1**
(45) Date de publication et mention de la délivrance du brevet: **14.03.2018**
(21) Numéro de dépôt: 15790948.2
(22) Date de dépôt: 06.11.2015
(51) Int. Cl.: H04L 29/06, G08G 5/00

(54) **SYSTEME ET PROCÉDÉ DE COMMUNICATION POUR UN CENTRE DE CONTROLE AERIEN**
KOMMUNIKATIONSSYSTEM UND VERFAHREN FÜR EIN LUFTKONTROLLZENTRUM
COMMUNICATION SYSTEM AND METHOD FOR AN AIR CONTROL CENTRE

(30) Priorité: 17.11.2014 FR 1461041
(43) Date de publication de la demande: 27.09.2017
(73) Titulaire: CS Systèmes d'Information, 92350 Le Plessis Robinson (FR)
(72) Inventeur: BERMENT, Vincent, F-75010 Paris (FR); THEBAULT, Bernard, F-94230 Cachan (FR)
(74) Mandataire: Argyma
(86) Numéro de dépôt international: PCT/EP2015/075888
(87) Numéro de publication internationale: WO 2016/078931

(56) Documents cités:
- FR-A1- 2 989 854
- US-A1- 2011 243 329

## Description

### DOMAINE TECHNIQUE GENERAL ET ART ANTERIEUR

La présente invention concerne le domaine général des systèmes de communication, en particulier, un système de communication pour un centre de contrôle du trafic aérien à des fins civiles et/ou militaires.

De manière connue, un centre de contrôle aérien permet de contrôler les aéronefs situés dans une zone de navigation aérienne. Un opérateur d'un centre de contrôle aérien permet de communiquer vocalement avec chaque pilote d'aéronef de ladite zone de navigation aérienne. En pratique, l'opérateur peut contrôler aussi bien des aéronefs civils que des aéronefs militaires. Afin de conserver la confidentialité des communications échangées entre un centre de contrôle aérien et un aéronef militaires, les communications peuvent être cryptées.

Pour assurer le contrôle aérien, chaque opérateur d'un centre de contrôle est équipé d'un équipement de communication vocale, en particulier un micro-casque, pour écouter et parler aux pilotes des aéronefs ainsi que d'un poste de gestion pour activer des fonctions, par exemple, un changement de fréquences de communication et un chiffrement des données vocales échangées. Le poste de gestion se présente de manière classique sous la forme d'un dispositif tactile afin de permettre un accès simple et ergonomique de l'opérateur aux fonctions affichées sur le dispositif tactile.

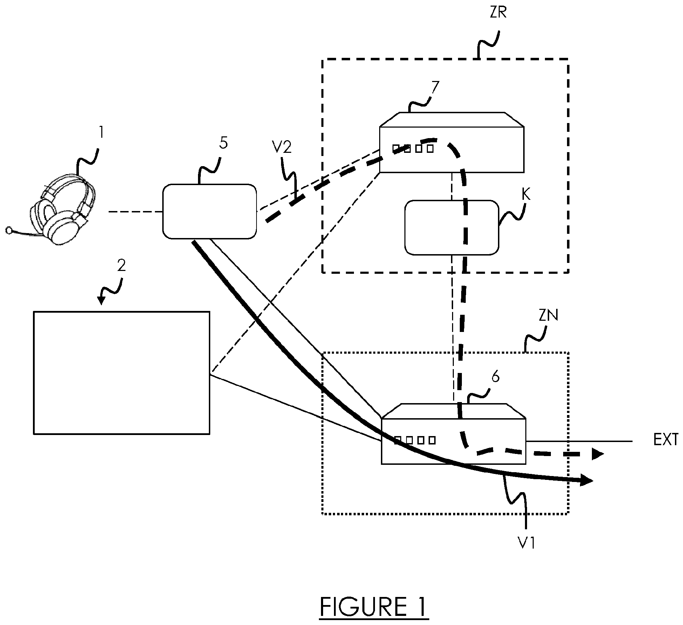

En référence à la figure 1, le système de communication comporte une première voie de communication publique V1, dite «voie noire», et deuxième voie de communication sécurisée V2, dite «voie rouge». Contrairement à la première voie de communication publique V1, la voie de communication sécurisée V2 comporte un module de chiffrement K afin de chiffrer les données vocales émises et reçues.

La première voie de communication publique V1 comporte un premier commutateur réseau 6 adapté pour échanger des données vocales entre une pluralité d'équipement de communication vocale 1 et l'extérieur EXT, c'est-à-dire, des aéronefs d'une zone de navigation prédéterminée ou d'autres centres de contrôle aérien.

Toujours en référence à la figure 1, la deuxième voie de communication sécurisée V2 comporte un deuxième commutateur réseau 7 et un module de chiffrement K qui sont adaptés pour échanger des données vocales chiffrées entre la pluralité d'équipement de communication vocale 1 et l'extérieur EXT. En particulier, le deuxième commutateur réseau 7 de la deuxième voie de communication sécurisée V2 est relié au premier commutateur réseau 6 de la première voie de communication publique V1 pour accéder à l'extérieur EXT.

Ainsi, pour communiquer en «clair» avec un aéronef, l'opérateur utilise son micro-casque 1 pour émettre des données vocales directement au premier commutateur réseau 6 de la première voie de communication publique V1 afin d'accéder à l'extérieur EXT. Au contraire, pour contrôler un aéronef militaire en mode chiffré, l'opérateur utilise son micro-casque 1 pour émettre des données vocales directement au deuxième commutateur réseau 7 de la deuxième voie de communication sécurisée V2 afin que les données vocales soient chiffrées par le module de chiffrement K avant d'être transmises au premier commutateur réseau 6 de la première voie de communication publique V1 pour accéder à l'extérieur EXT.

En pratique, en référence à la figure 1, le système de communication comporte une pluralité d'équipements de communication dont une partie des équipements est située dans une zone sécurisée ZR dite «zone rouge». On définit une zone noire ZN dans laquelle sont logés les équipements qui ne sont pas situés dans la zone rouge ZR. Les données vocales qui circulent par les équipements de la zone noire ZN ne sont pas sensibles. Au contraire, les données vocales qui circulent par les équipements de la zone rouge ZR sont sensibles et ne doivent pas être compromises. A titre d'exemple, une zone rouge ZR comporte généralement une pièce protégée par une cage de Faraday afin d'éviter toute possibilité d'interception.

Afin d'éviter une compromission des données vocales échangées entre un opérateur d'un centre de contrôle aérien et un aéronef militaires, il est important d'éviter toute fuite de données vocales depuis la deuxième voie de communication sécurisée V2 vers la première voie de communication publique V1. A cet effet, le système de communication comporte un module de sûreté 5 qui relie chaque équipement de communication vocale 1 d'un opérateur, c'est-à-dire son micro-casque, aux commutateurs 6, 7 de la première voie de communication publique V1 et de la deuxième voie de communication sécurisée V2. Un tel module de sûreté 5 permet de s'assurer que les données vocales émises par l'opérateur sont bien émises de manière chiffrée tel que présenté dans la demande de brevet EP2943813. Autrement dit, grâce au module de sûreté 5, le risque d'une compromission des données vocales échangées est limité.

Le poste de gestion 2 d'un opérateur, c'est-à-dire son dispositif tactile, demeure relié à la première voie de communication publique V1 et à la deuxième voie de communication sécurisée V2 afin de commander leurs commutateurs 6, 7, en particulier, lors d'un changement de voie de communication. Du fait de sa liaison aux deux voies de communication V1, V2, le poste de gestion 2 peut présenter un risque dans le cas d'espionnage performant, en particulier, par analyse des signaux transitant par l'alimentation électrique du poste de gestion 2.

Un des objectifs de la présente invention est de proposer un système de communication pour le contrôle aérien dont la sécurité est améliorée afin d'éliminer tout risque potentiel de compromission des données vocales échangées. Le document US2011/243329 constitue un autre document de l'art antérieur.

### PRESENTATION GENERALE DE L'INVENTION

A cet effet, l'invention concerne un système de communication pour un centre de contrôle aérien comprenant une première voie de communication publique, une deuxième voie de communication sécurisée, au moins un équipement de communication vocal adapté pour échanger des données vocales sur chacune des deux voies de communication, et au moins un poste de gestion, comportant une interface de commande et une interface de visualisation, configuré pour gérer les échanges de données vocales et commander l'aiguillage des données vocales sur chacune des deux voies de communication.

L'invention est remarquable en ce que le poste de gestion comporte :
- un premier module de traitement autonome, appartenant à la première voie de communication publique, adapté pour, d'une part, recevoir un message de commande de l'interface de commande suite à une commande physique d'un opérateur et, d'autre part, émettre un message primaire en fonction du message de commande reçu,
- un deuxième module de traitement autonome, appartenant à la deuxième voie de communication sécurisée, qui est adapté pour, d'une part, recevoir un message primaire et, d'autre part, générer un affichage en fonction dudit message primaire reçu sur ladite interface de visualisation à l'attention dudit opérateur ; et
- des moyens de transfert d'un message primaire du premier module de traitement autonome vers le deuxième module de traitement autonome.

Grâce à l'invention, l'affichage et la commande du poste de gestion sont dissociés. Ainsi, aucune information pertinente ne peut être obtenue en cas d'interception d'un message de commande sur la première voie de communication publique. Etant donné que l'affichage est généré sur la deuxième voie de communication sécurisée, le risque de compromission est faible. Chaque module de traitement autonome bénéficie de sa propre alimentation électrique, ce qui élimine toute liaison entre la première voie de communication publique et la deuxième voie de communication privée.

De manière avantageuse, l'amélioration de la sécurité est transparente pour l'opérateur qui possède un poste de gestion d'aspect extérieur similaire à l'art antérieur.

De manière préférée, l'interface de commande est une dalle tactile afin de conserver une interface utilisateur similaire à l'art antérieur. De préférence encore, l'interface de commande et l'interface de visualisation sont superposées.

Selon un aspect préféré, les moyens de transfert sont unidirectionnels afin d'éviter toute communication de la deuxième voie de communication privée vers la première voie de communication publique. De préférence, les moyens de transfert comportent au moins une diode.

De manière préférée, le deuxième module de traitement autonome est situé dans une zone sécurisée, de préférence, dans une pièce protégée par une cage de Faraday. Ainsi, tout risque de compromission de l'affichage du poste de gestion est éliminé.

Selon un aspect préféré, l'interface de commande est reliée au premier module de traitement autonome par une fibre optique afin de limiter le risque d'interception.

De manière préférée, le premier module de traitement autonome comprend des moyens de traitement adaptés pour émettre une commande fonctionnelle, en fonction du message de commande reçu, à un équipement de la première voie de communication publique. Ainsi, le premier module de traitement autonome peut émettre des commandes non sécurisées à la manière d'un poste de gestion traditionnel.

De préférence encore, le deuxième module de traitement autonome comprend des moyens de traitement adaptés pour émettre une commande fonctionnelle, en fonction du message primaire reçu, à un équipement de la deuxième voie de communication sécurisée. Ainsi, le deuxième module de traitement autonome peut émettre des commandes sécurisées à la manière d'un poste de gestion traditionnel. Les deux voies de communication sont avantageusement dissociées dans le système de communication selon l'invention.

De manière préférée, le premier module de traitement autonome et le deuxième module de traitement autonome comprenant respectivement des moyens de génération d'un affichage public et d'un affichage sécurisé, le deuxième module de traitement autonome comporte des moyens de synthèse afin de former un affichage combinant l'affichage public et l'affichage sécurisé. La gestion des affichages est ainsi avantageusement partagée entre les deux modules de traitement pour permettre un suivi en temps réel de l'affichage sur l'écran de visualisation lors d'un basculement entre les deux voies de communication.

L'invention concerne également un procédé de communication pour un centre de contrôle aérien comprenant une première voie de communication publique, une deuxième voie de communication sécurisée, au moins un équipement de communication vocal adapté pour échanger des données vocales sur chacune des deux voies de communication, et au moins un poste de gestion configuré pour gérer les échanges de données vocales et commander l'aiguillage des données vocales sur chacune des deux voies de communication, le poste de gestion comportant une interface de commande, un premier module de traitement autonome appartenant à la première voie de communication publique, un deuxième module de traitement autonome appartenant à la deuxième voie de communication sécurisée et une interface de visualisation.

Le procédé est remarquable en ce qu'il comporte :
- une étape de génération d'un message de commande de l'interface de commande vers le premier module de traitement autonome suite à une commande physique d'un opérateur ;
- une étape d'émission d'un message primaire depuis le premier module de traitement autonome, en fonction du message de commande reçu, vers le deuxième module de traitement autonome,
- une étape de génération d'un affichage par le deuxième module de traitement autonome en fonction dudit message primaire reçu ; et
- une étape d'affichage dudit affichage sur ladite interface de visualisation à l'attention dudit opérateur.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un système de communication selon l'art antérieur ;
- la figure 2 est une représentation schématique d'un système de communication selon l'invention ; et
- la figure 3 est une représentation schématique d'une autre forme de réalisation du système de communication selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

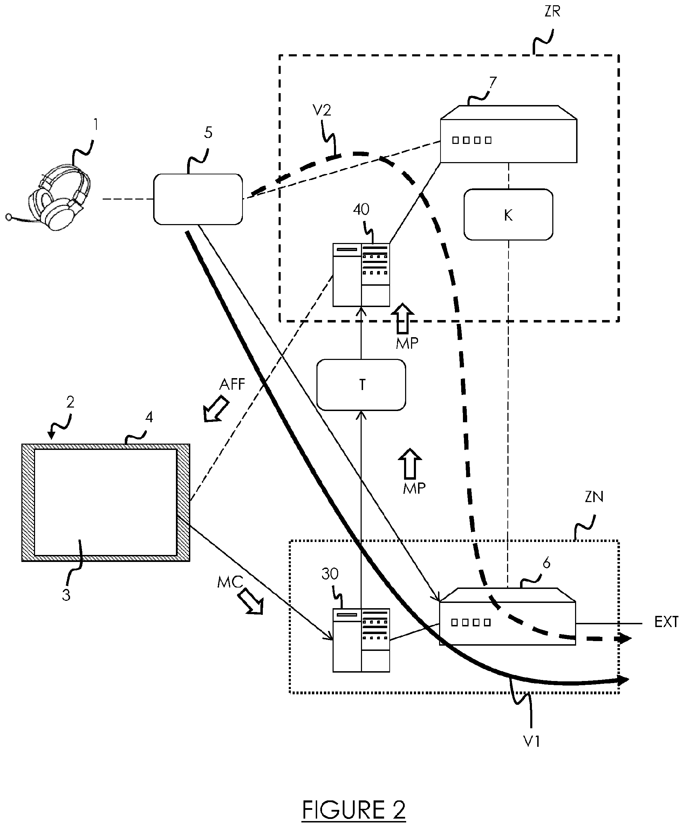

Un système de communication pour un centre de contrôle aérien selon l'invention est représenté à la figure 2.

En référence à la figure 2, le système de communication comprend une première voie de communication publique V1, une deuxième voie de communication sécurisée V2, un équipement de communication vocale 1 adapté pour échanger des données vocales sur chacune des deux voies de communication V1, V2 et un poste de gestion 2, comportant une interface de commande 3 et une interface de visualisation 4, configuré pour gérer les échanges de données vocales et commander l'aiguillage des données vocales sur chacune des deux voies de communication V1, V2.

Selon l'invention, comme cela sera détaillé par la suite, l'interface de commande 3 et l'interface de visualisation 4 du poste de gestion 2 sont dissociées l'une de l'autre afin d'éviter qu'une information de commande et/ou qu'une information de visualisation ne transite via une même alimentation électrique comme c'était le cas dans l'art antérieur avec un poste de gestion se présentant sous la forme d'un dispositif tactile classique dans laquelle l'interface de commande et l'interface de visualisation sont associées. De plus, comme cela sera détaillé par la suite, une telle dissociation permet d'éviter que des informations intelligibles soient compromises en cas d'interception.

Dans cet exemple, chaque opérateur du centre de contrôle aérien est équipé d'un équipement de communication vocale 1 et d'un poste de gestion 2. Chaque équipement de communication vocale 1 se présente sous la forme d'un micro-casque afin de pouvoir recevoir et émettre des données vocales mais il va de soi que d'autres types d'équipements de communication vocale pourraient convenir. Chaque poste de gestion 2 se présente extérieurement sous la forme d'un dispositif tactile de conception améliorée comme cela sera présenté par la suite.

Par la suite, la première voie de communication publique V1 est dite «voie noire» tandis que la deuxième voie de communication sécurisée V2 est dite «voie rouge». Contrairement à la première voie de communication publique V1, la voie de communication sécurisée V2 comporte un module de chiffrement-déchiffrement K, connue de l'homme du métier, afin de chiffrer et de déchiffrer les données vocales émises.

En référence à la figure 2, la première voie de communication publique V1 comporte un premier commutateur réseau 6 adapté pour échanger des données vocales entre une pluralité d'équipements de communication vocale 1 et l'extérieur EXT, c'est-à-dire, des aéronefs d'une zone de navigation prédéterminée ou d'autres centres de contrôle aérien. La deuxième voie de communication sécurisée V2 comporte un deuxième commutateur réseau 7 et un module de chiffrement K qui sont adaptés pour échanger des données vocales chiffrées entre une pluralité d'équipements de communication vocale 1 et l'extérieur EXT. En particulier, le deuxième commutateur réseau 7 de la deuxième voie de communication sécurisée V2 est relié au premier commutateur réseau 6 de la première voie de communication publique V1 via le module de chiffrement K afin d'accéder à l'extérieur EXT. De manière préférée, les commutateurs réseau 6, 7 sont des commutateurs audio.

Ainsi, en référence à la figure 2, pour contrôler un aéronef civil, l'opérateur utilise son micro-casque pour émettre des données vocales directement au premier commutateur réseau 6 de la première voie de communication publique V1 pour accéder à l'extérieur. Au contraire, pour contrôler un aéronef militaire, l'opérateur utilise son micro-casque pour émettre des données vocales directement au deuxième commutateur réseau 7 de la deuxième voie de communication sécurisée V2 afin que les données vocales soient chiffrées par le module de chiffrement K avant d'être transmises au premier commutateur réseau 6 de la première voie de communication publique V1 pour accéder à l'extérieur.

De manière similaire à l'art antérieur, le système de communication comporte un module de sûreté 5 qui relie chaque équipement de communication vocale 1 d'un opérateur, c'est-à-dire son micro-casque, aux commutateurs 6, 7 de la première voie de communication publique V1 et de la deuxième voie de communication sécurisée V2. Un tel module de sûreté 5 permet de s'assurer que les données vocales émises par l'opérateur sont bien émises de manière chiffrée tel que présenté dans la demande de brevet EP2943813.

En pratique, le système de communication comporte une pluralité d'équipements de communication dont une partie des équipements est située dans une zone sécurisée dite «zone rouge ZR ». On définit une zone noire ZN dans laquelle sont logés les équipements qui ne sont pas situés dans la zone sécurisée. Les données vocales qui circulent par les équipements de la zone noire ZN ne sont pas sensibles. Au contraire, les données vocales qui circulent par les équipements de la zone rouge ZR sont sensibles et ne doivent pas être compromises. Dans cet exemple, en référence à la figure 2, le système de communication comporte une zone rouge ZR qui est une pièce généralement protégée par une cage de Faraday afin d'éviter toute émission non-désirée en dehors de ladite zone rouge ZR.

Toujours en référence à la figure 2, la zone rouge ZR comporte le deuxième commutateur réseau 7 de la deuxième voie de communication sécurisée V2 ainsi que le module de chiffrement K. Les données vocales émises sur la deuxième voie de communication sécurisée V2 ne peuvent ainsi pas être interceptées.

Selon l'invention, en référence à la figure 2, le poste de gestion 2 comporte une interface de commande 3 et une interface de visualisation 4 qui sont dissociées afin d'éviter de relier la première voie de communication publique V1 et la deuxième voie de communication sécurisée V2 et ainsi limiter le risque d'interception de données confidentielles.

L'interface de commande 3 du poste de gestion 2 est adaptée pour recevoir une commande physique d'un opérateur. Dans cet exemple, l'interface de commande 3 est une dalle tactile pouvant être manipulée par un opérateur avec un ou plusieurs doigts afin d'émettre des messages de commande MC, par exemple, via une connexion du type USB. Ainsi, un appui d'un opérateur sur la dalle tactile correspond à un message de commande MC qui comprend, par exemple, la position géographique d'appui, le temps d'appui, un parcours d'appui, etc.

L'interface de visualisation 4 du poste de gestion 2 est adaptée pour permettre la visualisation d'un affichage AFF par l'opérateur. Dans cet exemple, l'interface de visualisation 4 est un écran d'affichage du type LED ou LCD pour recevoir des affichages via une connexion, par exemple du type VGA, DVI ou HDMI.

En référence à la figure 2, le poste de gestion 2 comporte un premier module de traitement autonome 30, appartenant à la première voie de communication publique V1, qui est relié à l'interface de commande 3 et qui est configuré pour recevoir un message de commande MC de l'interface de commande 3 et émettre un message primaire MP. Par module de traitement autonome, on entend un module de calcul qui possède sa propre alimentation électrique.

Le poste de gestion 2 comporte également un deuxième module de traitement autonome 40, appartenant à la deuxième voie de communication sécurisée V2, qui est configuré pour générer un affichage AFF sur l'interface de visualisation 4 suite à une réception d'un message primaire MP. En outre, le poste de gestion 2 comporte des moyens de transfert unidirectionnel T d'un message primaire MP du premier module de traitement autonome 30 vers le deuxième module de traitement autonome 40. Dans cet exemple, les moyens de transfert unidirectionnel T comportent une diode unidirectionnelle afin de n'autoriser qu'un transfert depuis la première voie de communication publique V1 vers la deuxième voie de communication sécurisée V2. Il va de soi que les moyens de transfert unidirectionnel T pourraient se présenter sous une forme différente.

Grâce à l'invention, seuls les messages primaires MP sont émis sur la première voie de communication publique V1, ces derniers n'étant pas sensibles car ils ne correspondent qu'à des données sans lien avec la fonction commandée.

De manière avantageuse, l'affichage AFF généré par le deuxième module de traitement autonome 40 ne peut pas être intercepté étant donné que ce dernier appartient à la deuxième voie de communication sécurisée V2. En outre, dans cet exemple, le deuxième module de traitement autonome 40 appartient à la zone rouge ZR et est logé dans une pièce sécurisée, de préférence, protégée par une cage de Faraday, ce qui limite tout risque d'interception.

En outre, étant donné que chaque interface 3, 4 est reliée à un module de traitement autonome 30, 40, les alimentations ne sont pas partagées et il n'existe pas de risque qu'un affichage AFF transite via l'alimentation du premier module de traitement autonome 30 de la première voie de communication publique V1. Enfin, grâce aux moyens de transfert unidirectionnels T, aucune information ne peut être transférée depuis la deuxième voie de communication sécurisée V2 vers la première voie de communication publique V1.

De manière avantageuse, la dissociation des interfaces 3, 4 du poste de gestion 2 n'impacte par l'exécution des tâches des opérateurs. En effet, l'interface de commande 3 et l'interface de visualisation 4 sont superposées à la manière d'un écran tactile selon l'art antérieur. D'un point de vue pratique, tout appui sur l'interface de commande 3 engendre un affichage AFF sur l'interface de visualisation 4 qui confirme que l'opérateur a exercé un appui. L'expérience de l'opérateur n'est ainsi pas dégradée suite à l'amélioration de la sécurité.

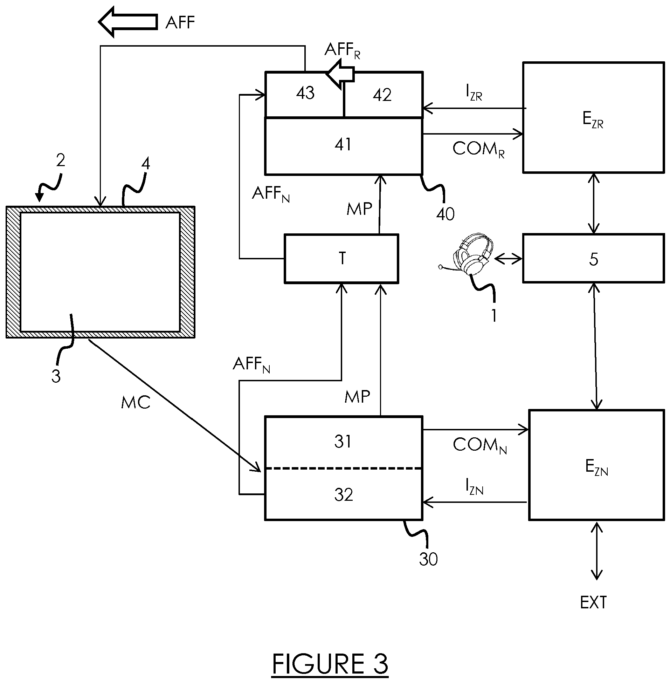

Une forme de réalisation préférée de l'invention va être dorénavant présentée en référence à la figure 3. Les références utilisées pour décrire les éléments de structure ou fonction identique, équivalente ou similaire à celles des éléments de la figure 2 sont les mêmes, pour simplifier la description. D'ailleurs, l'ensemble de la description de la forme de réalisation de la figure 2 n'est pas reprise, cette description s'appliquant aux éléments de la figure 3 lorsqu'il n'y a pas d'incompatibilités. Seules les différences notables, structurelles et fonctionnelles, sont décrites.

En référence à la figure 3, le premier module de traitement autonome 30 comporte des moyens de traitement 31 adaptés pour convertir le message de commande MC en un message primaire MP interprétable par le deuxième module de traitement autonome 40. Le message primaire MP est une interprétation du message de commande MC en fonction de la connaissance par le premier module de traitement autonome 30 de l'affichage AFF de l'interface de visualisation 4.

Par ailleurs, les moyens de traitement 31 sont également adaptés pour émettre une commande fonctionnelle COM_{N} en fonction du message de commande MC reçu, par exemple, un changement de fréquences à des équipements de la zone noire E_{ZN}, par exemple, le commutateur réseau 6.

Le premier module de traitement autonome 30 comporte également des moyens de génération d'affichage 32 adaptés pour générer un affichage public AFF_{N} en fonction du message de commande MC reçu et des informations publiques I_{ZN} envoyées par les équipements de la zone noire E_{ZN}.

Toujours en référence à la figure 3, de manière similaire au premier module de traitement autonome 30, le deuxième module de traitement autonome 40 comporte des moyens de traitement 41 adaptés pour émettre une commande sécurisée COM_{R} en fonction du message primaire MC reçu, par exemple, un chiffrement des données à des équipements de la zone rouge E_{ZR}, par exemple, le commutateur réseau 7 ou le module de chiffrement K.

De manière préférée, le deuxième module de traitement autonome 40 comporte des moyens de génération 42 adaptés pour générer un affichage sécurisé AFF_{R} en fonction du message primaire MP reçu et des informations sécurisées I_{ZR} envoyées par les équipements de la zone rouge E_{ZR}.

Toujours en référence à la figure 3, le deuxième module de traitement autonome 40 comporte des moyens de synthèse 43 adaptés pour combiner l'affichage public AFF_{N} et l'affichage sécurisé AFF_{R} et générer l'affichage global AFF destiné à être affiché sur l'interface de visualisation 4 du poste de gestion 2. L'utilisation de modules de génération 32, 42 permet avantageusement de dissocier les affichages publics des affichages confidentiels et ainsi partager la génération d'affichages entre les deux modules de traitement autonome 30, 40.

Un exemple de mise en oeuvre de l'invention va être dorénavant présenté pour le contrôle aérien d'un aéronef militaire.

En référence à la figure 3, un opérateur d'un centre de contrôle aérien est équipé d'un micro-casque et d'un dispositif tactile de conception améliorée pour contrôler un aéronef militaire se situant dans une zone de navigation aérienne.

À titre d'exemple, l'opérateur souhaite changer de fréquence de communication et chiffrer la communication avec ledit aéronef militaire. À cet effet, l'opérateur appuie sur la dalle tactile dans la zone où est affichée l'icône relative à un changement de fréquence avec chiffrement sur l'écran d'affichage, la dalle tactile et l'écran d'affichage étant superposés.

Cet appui physique de l'opérateur est traduit en un message de commande MC qui est émis par la dalle tactile 3 vers le premier module de traitement autonome 30 Le message de commande MC comporte, dans cet exemple, la position géographique d'appui.

Les moyens de traitement 31 du premier module de traitement autonome 30 convertissent le message de commande MC en un message primaire MP qui est envoyé aux moyens de transfert T. De préférence, le message primaire MP est une encapsulation du message de commande MC.

Dans cet exemple, les moyens de traitement 31 du premier module de traitement autonome 30 émettent en outre une commande fonctionnelle COM_{N} aux équipements de la zone noire E_{ZN}, en particulier au commutateur réseau 6, afin de commander un changement de fréquences.

En parallèle, les moyens de génération d'affichage 32 du premier module de traitement autonome 30 génèrent un affichage public AFF_{N}, dans lequel l'icône de changement de fréquence est, par exemple, de couleur différente, qui est transmis au deuxième module de traitement autonome 40 via les moyens de transfert T. De manière préférée, l'affichage public AFF_{N} peut également comprendre des informations publiques I_{ZN} issues des équipements de la zone noire EZN, en particulier, l'acquittement par l'équipement E_{ZN} de la commande de changement de fréquence et l'information qu'il a effectué ce changement avec succès.

Les moyens de transfert unidirectionnels T permettent avantageusement de mettre en relation les deux modules de traitement autonome 30, 40 sans risque de compromission de données sécurisées.

Toujours en référence à la figure 3, le message primaire MP est reçu par les moyens de traitement 41 du deuxième module de traitement 40 qui émettent une commande fonctionnelle sécurisée COM_{R} aux équipements de la zone rouge E_{ZR}, en particulier au commutateur réseau 7, afin de commander un chiffrement des communications par le module de chiffrement K.

En parallèle, les moyens de génération d'affichage 42 du deuxième module de traitement 40 génèrent un affichage sécurisé AFF_{R}, dans lequel l'icône de chiffrement est, par exemple, de couleur différente. De manière préférée, l'affichage privé AFF_{R} peut également comprendre des informations sécurisées I_{ZR} issues des équipements de la zone rouge E_{ZR}, en particulier, l'acquittement par l'équipement E_{ZR} de la commande de passage en chiffre et l'information qu'il a effectué ce passage avec succès.

Avantageusement, l'affichage privé AFF_{R} ne transite que dans des équipements de la zone rouge ZR qui est sécurisée, ce qui limite le risque de compromission.

Enfin, les moyens de synthèse 43 du deuxième module de traitement 40 forment un affichage global AFF à partir de l'affichage sécurisé AFF_{R} et de l'affichage public AFF_{N}. Autrement dit, l'affichage global AFF comporte, dans notre exemple, une icône de changement de fréquence et une icône de chiffrement de couleurs différentes. L'affichage global AFF est ensuite affiché sur l'interface de visualisation 4 (écran) du dispositif tactile 2. Ainsi, l'opérateur est informé que son appui sur l'interface de commande 3 (dalle tactile 3) a été pris en compte et que le changement de fréquences et le chiffrement sont activés.

Une génération d'affichages par les deux modules de traitement autonome 30, 40 permet un suivi en temps réel de l'affichage global AFF lors d'un basculement entre les deux voies de communication V1, V2 étant donné que les deux modules de traitement autonome 30, 40 évoluent en parallèle au fur et à mesure des messages reçus.

De manière préférée, les liaisons entre les modules de traitement autonome 30, 40 et leurs interfaces respectives 3, 4 sont réalisées en fibre optique pour améliorer la sécurité. De préférence, des moyens d'interface sont utilisés pour connecter les modules de traitement 30, 40 et les interfaces 3, 4 aux fibres optiques, de préférence, des interfaces du type KVM. La fibre optique permet, d'une part, de découpler les alimentations des modules de traitement 30, 40 et, d'autre part, d'éviter une compromission par rayonnement et par conduction sur les câbles transportant les signaux.

De préférence, les liaisons entre les modules de traitement autonome 30, 40 et les moyens de transfert unidirectionnel T, en particulier une diode, sont également réalisées en fibre optique pour améliorer le découplage entre les deux zones ZN, ZR.

Il a été présenté une mise en oeuvre lors de l'émission de données mais il va de soi que le système permet d'éviter, de manière symétrique, une compromission des données reçues.

De même, il a été présenté une mise en oeuvre dans laquelle les modules de traitement autonome 30, 40 sont situés dans des zones différentes. Néanmoins, il va de soi que les modules de traitement autonome 30, 40 pourraient être situés dans une même zone.

De manière avantageuse, le déport des modules de traitement autonome 30, 40 permet, outre de réduire le risque de compromission électromagnétique, d'alléger le poste de gestion 2 et de limiter ainsi son encombrement.

Grâce à l'invention, le risque de compromission par le poste de gestion 2 est considérablement limité. De manière avantageuse, cette amélioration de la sécurité est transparente pour les opérateurs du centre de contrôle aérien.

## Revendications

1. Système de communication pour un centre de contrôle aérien comprenant :
- une première voie de communication publique (V1),
- une deuxième voie de communication sécurisée (V2),
- au moins un équipement de communication vocal (1) adapté pour échanger des données vocales sur chacune des deux voies de communication (V1, V2),
- au moins un poste de gestion (2), comportant une interface de commande (3) et une interface de visualisation (4), configuré pour gérer les échanges de données vocales et commander l'aiguillage des données vocales sur chacune des deux voies de communication (V1, V2),
système **caractérisé par le fait que** le poste de gestion (2) comporte :
- un premier module de traitement autonome (30), appartenant à la première voie de communication publique (V1), adapté pour, d'une part, recevoir un message de commande (MC) de l'interface de commande (3) suite à une commande physique d'un opérateur et, d'autre part, émettre un message primaire (MP) en fonction du message de commande (MC) reçu;
- un deuxième module de traitement autonome (40), appartenant à la deuxième voie de communication sécurisée (V2), qui est adapté pour, d'une part, recevoir un message primaire (MP) et, d'autre part, générer un affichage (AFF) en fonction dudit message primaire reçu (MP) sur ladite interface de visualisation (4) à l'attention dudit opérateur ; et
- des moyens de transfert (T) d'un message primaire (MP) du premier module de traitement autonome (30) vers le deuxième module de traitement autonome (40).

2. Système de communication selon la revendication 1, dans lequel l'interface de commande (3) est une dalle tactile.

3. Système de communication selon l'une des revendications 1 à 2, dans lequel l'interface de commande (3) et l'interface de visualisation (4) sont superposées.

4. Système de communication selon l'une des revendications 1 à 3, dans lequel les moyens de transfert (T) sont unidirectionnels.

5. Système de communication selon la revendication 4, dans lequel les moyens de transfert (T) comportent au moins une diode.

6. Système de communication selon l'une des revendications 1 à 5, dans lequel le deuxième module de traitement autonome (40) est situé dans une zone sécurisée (ZR), de préférence, dans une pièce protégée par une cage de Faraday.

7. Système de communication selon l'une des revendications 1 à 6, dans lequel l'interface de commande (3) est reliée au premier module de traitement autonome (30) par une fibre optique.

8. Système de communication selon l'une des revendications 1 à 7, dans lequel, le premier module de traitement autonome (30) comprend des moyens de traitement (31) adaptés pour émettre une commande fonctionnelle (COM_{N}), en fonction du message de commande reçu (MC), à un équipement de la première voie de communication publique (V1).

9. Système de communication selon l'une des revendications 1 à 8, dans lequel, le premier module de traitement autonome (30) et le deuxième module de traitement autonome (40) comprenant respectivement des moyens de génération (32, 42) d'un affichage public (AFF_{N}) et d'un affichage sécurisé (AFF_{R}), le deuxième module de traitement autonome (40) comporte des moyens de synthèse (43) afin de former un affichage (AFF) combinant l'affichage public (AFF_{N}) et l'affichage sécurisé (AFF_{R}).

10. Procédé de communication pour un centre de contrôle aérien comprenant une première voie de communication publique (V1), une deuxième voie de communication sécurisée (V2), au moins un équipement de communication vocal (1) adapté pour échanger des données vocales sur chacune des deux voies de communication (V1, V2), et au moins un poste de gestion (2) configuré pour gérer les échanges de données vocales et commander l'aiguillage des données vocales sur chacune des deux voies de communication (V1, V2), le poste de gestion (2) comportant une interface de commande (3), un premier module de traitement autonome (30) appartenant à la première voie de communication publique (V1), un deuxième module de traitement autonome (40) appartenant à la deuxième voie de communication sécurisée (V2) et une interface de visualisation (4), procédé **caractérisé par le fait qu'il** comporte :
- une étape de génération d'un message de commande (MC) de l'interface de commande (3) vers le premier module de traitement autonome (30) suite à une commande physique d'un opérateur ;
- une étape d'émission d'un message primaire (MP) depuis le premier module de traitement autonome (30), en fonction du message de commande reçu (MC), vers le deuxième module de traitement autonome (40),
- une étape de génération d'un affichage (AFF) par le deuxième module de traitement autonome (40) en fonction dudit message primaire reçu (MP) ; et
- une étape d'affichage dudit affichage (AFF) sur ladite interface de visualisation (4) à l'attention dudit opérateur.

## Patentansprüche

1. Kommunikationssystem für ein Luftkontrollzentrum, umfassend:
- einen ersten öffentlichen Kommunikationsweg (V1),
- einen zweiten gesicherten Kommunikationsweg (V2),
- mindestens eine Sprachkommunikationsausrüstung (1), die für den Austausch von Sprachdaten über jeden der zwei Kommunikationswege (V1, V2) geeignet ist,
- mindestens eine Verwaltungsstelle (2), aufweisend eine Steuerschnittstelle (3) und eine Anzeigeschnittstelle (4), die konfiguriert ist, um die Austausche von Sprachdaten zu verwalten und um die Weichenstellung der Sprachdaten auf jedem der zwei Kommunikationswege (V1, V2) zu steuern,
wobei das System **dadurch gekennzeichnet ist, dass** die Verwaltungsstelle (2) aufweist:
- ein erstes autonomes Verarbeitungsmodul (30), das zum ersten öffentlichen Kommunikationsweg (V1) gehört, das geeignet ist, zum einen eine Steuernachricht (MC) der Steuerschnittstelle (3) infolge eines physischen Befehls eines Bedieners zu empfangen und zum anderen eine primäre Nachricht (MP) in Abhängigkeit von der empfangenen Steuernachricht (MC) zu senden,
- ein zweites autonomes Verarbeitungsmodul (40), das zum zweiten gesicherten Kommunikationsweg (V2) gehört, das geeignet ist, zum einen eine primäre Nachricht (MP) zu empfangen und zum anderen eine Anzeige (AFF) in Abhängigkeit von der empfangenen primären Nachricht (MP) auf der Anzeigeschnittstelle (4) für den Bediener zu erzeugen, und
- Übertragungsmittel (T) einer primären Nachricht (MP) des ersten autonomen Verarbeitungsmoduls (30) zum zweiten autonomen Verarbeitungsmodul (40).

2. Kommunikationssystem nach Anspruch 1, wobei die Steuerschnittstelle (3) eine berührungsempfindliche Tafel ist.

3. Kommunikationssystem nach einem der Ansprüche 1 bis 2, wobei die Steuerschnittstelle (3) und die Anzeigeschnittstelle (4) übereinandergestellt sind.

4. Kommunikationssystem nach einem der Ansprüche 1 bis 3, wobei die Übertragungsmittel (T) eindirektional sind.

5. Kommunikationssystem nach Anspruch 4, wobei die Übertragungsmittel (T) mindestens eine Diode aufweisen.

6. Kommunikationssystem nach einem der Ansprüche 1 bis 5, wobei sich das zweite autonome Verarbeitungsmodul (40) in einem gesicherten Bereich (ZR), vorzugsweise in einem durch einen Faraday'schen Käfig geschützten Raum, befindet.

7. Kommunikationssystem nach einem der Ansprüche 1 bis 6, wobei die Steuerschnittstelle (3) mit dem ersten autonomen Verarbeitungsmodul (30) durch eine optische Faser verbunden ist.

8. Kommunikationssystem nach einem der Ansprüche 1 bis 7, wobei das erste autonome Verarbeitungsmodul (30) Verarbeitungsmittel (31) umfasst, die zum Senden eines Funktionsbefehls (COM_{N}) in Abhängigkeit von der empfangenen Steuernachricht (MC) an eine Ausrüstung des ersten öffentlichen Kommunikationswegs (V1) geeignet sind.

9. Kommunikationssystem nach einem der Ansprüche 1 bis 8, wobei, wobei das erste autonome Verarbeitungsmodul (30) und das zweite autonome Verarbeitungsmodul (40) jeweils Erzeugungsmittel (32, 42) einer öffentlichen Anzeige (AFF_{N}) und einer gesicherten Anzeige (AFF_{R}) umfassen, das zweite autonome Verarbeitungsmodul (40) Synthesemittel (43) aufweist, um eine Anzeige (AFF) zu bilden, die die öffentliche Anzeige (AFF_{N}) und die gesicherte Anzeige (AFF_{R}) kombiniert.

10. Kommunikationsverfahren für ein Luftkontrollzentrum, umfassend einen ersten öffentlichen Kommunikationsweg (V1), einen zweiten gesicherten Kommunikationsweg (V2), mindestens eine Sprachkommunikationsausrüstung (1), die für den Austausch von Sprachdaten über jeden der zwei Kommunikationswege (V1, V2) geeignet ist, und mindestens eine Verwaltungsstelle (2), die konfiguriert ist, um die Austausche von Sprachdaten zu verwalten und um die Weichenstellung der Sprachdaten auf jedem der zwei Kommunikationswege (V1, V2) zu steuern, wobei die Verwaltungsstelle (2) eine Steuerschnittstelle (3), ein erstes autonomes Verarbeitungsmodul (30), das zum ersten öffentlichen Kommunikationsweg (V1) gehört, ein zweites autonomes Verarbeitungsmodul (40), das zum zweiten gesicherten Kommunikationsweg (V2) gehört, und eine Anzeigeschnittstelle (4) aufweist, wobei das Verfahren **dadurch gekennzeichnet ist, dass** es aufweist:
- einen Erzeugungsschritt einer Steuernachricht (MC) von der Steuerschnittstelle (3) zum ersten autonomen Verarbeitungsmodul (30) infolge eines physischen Befehls eines Bedieners,
- einen Sendeschritt einer primären Nachricht (MP) ab dem ersten autonomen Verarbeitungsmodul (30) in Abhängigkeit von der empfangenen Steuernachricht (MC) zum zweiten autonomen Verarbeitungsmodul (40),
- einen Erzeugungsschritt einer Anzeige (AFF) durch das zweite autonome Verarbeitungsmodul (40) in Abhängigkeit von der empfangenen primären Nachricht (MP) und
- einen Anzeigeschritt der Anzeige (AFF) auf der Anzeigeschnittstelle (4) für den Bediener.

## Claims

1. Communication system for an air control centre comprising:
- a first public communication channel (V1),
- a second secure communication channel (V2),
- at least one voice communication device (1) suitable for exchanging voice data on each one of the two communication channels (V1, V2),
- at least one management station (2), comprising a control interface (3) and a display interface (4), configured to manage the voice data exchanges and to control the branching of the voice data on each one of the two communication channels (V1, V2),
system **characterised by the fact that** the management station (2) comprises:
- a first stand-alone processing module (30), belonging to the first public communication channel (V1), suitable for, on the one hand, receiving a control message (MC) from the control interface (3) following a physical command from an operator and, on the other hand, emitting a primary message (MP) according to the control message (MC) received;
- a second stand-alone processing module (40), belonging to the second secure communication channel (V2), which is suitable for, on the one hand, receiving a primary message (MP) and, on the other hand, generating a display (AFF) according to said primary message (MP) received on said display interface (4) for the attention of said operator; and
- means for transferring (T) a primary message (MP) from the first stand-alone processing module (30) to the second stand-alone processing module (40).

2. Communication system according to claim 1, wherein the control interface (3) is a touchscreen.

3. Communication system according to one of claims 1 to 2, wherein the control interface (3) and the display interface (4) are superimposed.

4. Communication system according to one of claims 1 to 3, wherein the means for transferring (T) are unidirectional.

5. Communication system according to claim 4, wherein the means for transferring (T) comprise at least one diode.

6. Communication system according to one of claims 1 to 5, wherein the second stand-alone processing module (40) is located in a secure zone (ZR), more preferably, in a room protected by a Faraday cage.

7. Communication system according to one of claims 1 to 6, wherein the control interface (3) is connected to the first stand-alone processing module (30) by an optical fibre.

8. Communication system according to one of claims 1 to 7, wherein, the first stand-alone processing module (30) comprises means for processing (31) suitable for emitting a functional command (COM_{N}), according to the control message received (MC), to a device of the first public communication channel (V1).

9. Communication system according to one of claims 1 to 8, wherein, the first stand-alone processing module (30) and the second stand-alone processing module (40) comprising respectively means for generating (32, 42) a public display (AFF_{N}) and a secure display (AFF_{R}), the second stand-alone processing module (40) comprises means of synthesis (43) in order to form a display (AFF) that combines the public display (AFF_{N}) and the secure display (AFF_{R}).

10. Communication method for an air control centre comprising a first public communication channel (V1), a second secure communication channel (V2), at least one voice communication device (1) suitable for exchanging voice data on each one of the two communication channels (V1, V2), and at least one management station (2) configured to manage the voice data exchanges and to control the branching of the voice data on each one of the two communication channels (V1, V2), with the management station (2) comprising a control interface (3), a first stand-alone processing module (30) belonging to the first public communication channel (V1), a second stand-alone processing module (40) belonging to the second secure communication channel (V2) and a display interface (4), method **characterised by the fact that** it comprises:
- a step of generating a control message (MC) from the control interface (3) to the first stand-alone processing module (30) following a physical command from an operator;
- a step of emitting a primary message (MP) from the first stand-alone processing module (30), according to the control message received (MC), to the second stand-alone processing module (40).
- a step of generating a display (AFF) by the second stand-alone processing module (40) according to said primary message received (MP); and
- a step of displaying said display (AFF) on said display interface (4) for the attention of said operator.
